# EUROPÄISCHE PATENTSCHRIFT

(11) **EP 3 385 105 B1**
(45) Veröffentlichungstag und Bekanntmachung des Hinweises auf die Patenterteilung: **03.04.2019**
(21) Anmeldenummer: 17165225.8
(22) Anmeldetag: 06.04.2017
(51) Int. Cl.: B60K 15/04, B60K 13/04

(54) **TANKVORRICHTUNG**
REFUELLING DEVICE
DISPOSITIF DE RÉSERVOIR

(43) Veröffentlichungstag der Anmeldung: 10.10.2018
(73) Patentinhaber: Magna Steyr Fuel Systems GesmbH, 8261 Sinabelkirchen (AT)
(72) Erfinder: GROSS, Jörg, 50389 Wesseling (DE)
(74) Vertreter: Zangger, Bernd

(56) Entgegenhaltungen:
- EP-A1- 1 199 208
- WO-A1-2016/005192
- DE-A1-102014 007 709
- DE-A1-102014 224 905

## Beschreibung

### Gebiet der Erfindung

Die vorliegende Erfindung betrifft eine Tankvorrichtung für ein Kraftfahrzeug, insbesondere für einen SCR-Tank (selective catalytic reduction).

### Stand der Technik

Tankvorrichtungen, insbesondere für SCR-Tanks von Kraftfahrzeugen, sind an sich bekannt. Sie können außer dem Kraftfahrzeugtank selbst, eine Betankungsvorrichtung umfassen, mit einem Einfüllrohr und einem Einfüllrohrkopf zum Betanken des Kraftfahrzeugtanks mittels einer Zapfpistole, sowie auch eine Entlüftungsvorrichtung, die einen Entlüftungsausgang zur Abfuhr von Gasen in die Umgebung des Fahrzeuges, aufweist.

Gerade bei SCR-Tanks, wie insbesondere Harnstofftanks, die zur Abgasnachbehandlung eingesetzt werden, ist die Ausbildung einer geeigneten Entlüftungsvorrichtung schwierig. Die Betankung derartiger Tanks kann einerseits über Zapfpistolen mit hohen Füllgeschwindigkeiten von bis zu 40 L/min erfolgen, andererseits aber auch über einfache Kanister bzw. Gebinde, wie zum Beispiel Kruseflaschen. Diese Betankungsvielfalt erfordert auf Seiten der Tankvorrichtung flexible Entlüftungsvorrichtungen, die auch ein Befüllen in kurzer Zeit und dabei eine sichere Entlüftung ermöglichen.

Zudem müssen auch die Eigenschaften des vorgesehenen Tankinhalts, typischerweise wässriger Harnstofflösung, berücksichtigt werden, die beim Rücktrocknen zu Kristallbildung neigt. An sich ist der Einsatz von Schwimmerventilen in Entlüftungsvorrichtungen bekannt. Derartige Schwimmerventile können einen ausreichenden Entlüftungspfad bei verschiedenen Betankungsgeschwindigkeiten ausbilden und dabei den Austritt von Flüssigkeit durch den Entlüftungsausgang verhindern. Jedoch können durch Austrocknen von Rückständen des Tankinhalts am beweglichen Schwimmer mit der damit verbundenen Kristallbildung Undichtigkeiten am Schwimmerventil.

Eine Tankvorrichtung mit den Merkmalen des Oberbegriffs von Anspruch1 ist aus EP 1 199 208 bekannt.

### Zusammenfassung der Erfindung

Es ist eine Aufgabe der Erfindung, Tankvorrichtungen für Kraftfahrzeuge in dieser Hinsicht zu verbessern und insbesondere eine Tankvorrichtung anzugeben, die eine sichere Entlüftung bei verschiedenen Betankungsgeschwindigkeiten für einen Harnstofftank ermöglicht.

Die Lösung der Aufgabe erfolgt durch eine Tankvorrichtung für ein Kraftfahrzeug, umfassend einen Kraftfahrzeugtank, einen Einfüllrohrkopf zum Betanken des Kraftfahrzeugtanks und einen Entlüftungsausgang, wobei der Einfüllrohrkopf eine Einfüllöffnung zum Einführen einer Zapfpistole zum Betanken des Kraftfahrzeugtanks mittels der Zapfpistole und eine Betankungsentlüftungsöffnung umfasst, wobei die Betankungsentlüftungsöffnung beim Einführen der Zapfpistole geöffnet wird, so dass ein Innenraum des Einfüllrohrkopfes über die Betankungsentlüftungsöffnung mit dem Entlüftungsausgang fluidverbunden ist, wobei die Betankungsentlüftungsöffnung beim Entfernen der Zapfpistole aus der Einfüllöffnung geschlossen wird, wobei der Einfüllrohrkopf eine Betriebsentlüftungsöffnung aufweist mit einer semi-permeablen Membran die den Durchtritt von Gasen durch die Betriebsentlüftungsöffnung ermöglicht und den Durchtritt von Flüssigkeiten verhindert, wobei die Betriebsentlüftungsöffnung mit dem Entlüftungsausgang fluidverbunden ist.

Erfindungsgemäß ist ein Einfüllrohrkopf vorgesehen, der gleichzeitig zwei verschiedene Entlüftungsöffnungen aufweist, welche beide zu einem gemeinsamen Entlüftungsausgang führen, nämlich einerseits eine Betriebsentlüftungsöffnung, die während des gesamten Betriebs der Tankvorrichtung bzw. des Kraftfahrzeuges geöffnet sein kann und die zudem eine ausreichende Betankungsentlüftung im Fall einer Betankung über Gebinde wie Kanister ermöglicht und andererseits eine Betankungsentlüftungsöffnung, die zusätzlich nur dann geöffnet wird, wenn eine Zapfpistole zum Betanken in den Einfüllrohrkopf eingesetzt wird. Die Betankungsentlüftungsöffnung ist daher vorzugsweise für eine höhere Durchflussrate bzw. einen höheren Volumenstrom für das abzuführende Gas ausgebildet, als die Betriebsentlüftungsöffnung. Die Betriebsentlüftungsöffnung ist mit einer semi-permeablen Membran ausgestattet, die den unerwünschten Austritt von flüssigem Tankinhalt verhindert.

Durch die erfindungsgemäße Lösung wird auf bewegliche Bauteile verzichtet, die mittels des Tankmediums, insbesondere mittels wässriger Harnstofflösung, gesteuert würden. Dadurch werden unerwünschte Kristallbildungen und Undichtigkeiten verhindert. Durch das Vorsehen der beiden unterschiedlichen Entlüftungswege ist dabei auch eine sichere Entlüftung in den unterschiedlichen Betankungsszenarien gewährleistet.

Weiterbildungen der Erfindung sind in den abhängigen Ansprüchen, der Beschreibung sowie den beigefügten Zeichnungen angegeben.

Vorzugsweise ist der Entlüftungsausgang dazu ausgebildet, in Einbaulage in einem Kraftfahrzeug, in Fahrtrichtung hinter der Einfüllöffnung zu liegen, insbesondere hinter einer Radhausschale des Kraftfahrzeuges. Üblicherweise werden semi-permeable Membranen in Entlüftungspfaden samt deren Entlüftungsausgängen direkt in einem Einfüllrohrkopf bzw. Einfüllstutzen, beispielsweise in einer Verschlusskappe, ausgebildet, was dazu führt dass beim Betanken unangenehm riechende Gase in Richtung zum Betankenden abgegeben werden können. Durch Verwendung eines Entlüftungsausgangs hinter der Einfüllöffnung, besonders bevorzugt hinter einer Radhausschale, für beide Entlüftungspfade, kann das beim Betanken wie auch bei der Betriebsentlüftung austretende Gas, beispielsweise Ammoniak-Gasgemisch, zu keiner Geruchsbelästigung führen.

Die Einfüllöffnung ist bevorzugt zur Aufnahme eines Betankungsgebindes, insbesondere einer Betankungsflasche, wie beispielsweise einer Kruseflasche, ausgebildet, so dass auf diese Weise eine weitere Betankungsmöglichkeit, zusätzlich zur Betankung über Zapfpistole, besteht.

Die semipermeable Membran ist vorzugsweise so ausgebildet und angeordnet, dass eine Betankungsentlüftung bei Betankung über ein angeschlossenes Betankungsgebinde, insbesondere eine Betankungsflasche, durch die Betriebsentlüftungsöffnung und weiter durch den Entlüftungsausgang erfolgt.

Die Betankungsentlüftungsöffnung wird bevorzugt beim Einführen der Zapfpistole durch die Einfüllöffnung mittels Verschieben eines Betätigungselements und/ oder durch Verschwenken einer Klappe durch die Zapfpistole geöffnet.

Das Betätigungselement ist vorzugsweise durch ein Federelement in Schließrichtung vorgespannt.

Durch Verschieben des Betätigungselements beim Einführen der Zapfpistole kann, beispielsweise mittels einer Mitnahmefläche, die Klappe in Öffnungsrichtung verschwenkt werden.

Das Betätigungselement kann ein Stößel sein, der in eine Strömungsleiteinrichtung des Einfüllrohrkopfes hineinragt. Der Stößel kann eine Einführschräge aufweisen.

Vorzugsweise ist die semipermeable Membran radial außerhalb des Betätigungselements und/oder der Klappe am Einfüllrohrkopf angeordnet.

Zwischen der Betriebsentlüftungsöffnung und/oder der Betankungsentlüftungsöffnung einerseits und dem Kraftstofftank andererseits ist vorzugsweise ein Entlüftungspfad eingerichtet, wobei im Entlüftungspfad besonders bevorzugt eine Drossel angeordnet ist. Hierdurch kann verhindert werden, dass aufsteigende Flüssigkeit im Entlüftungspfad, insbesondere bei einer Zapfpistolenbetankung, bis zur Betankungsentlüftungsöffnung gelangt.

Der Kraftfahrzeugtank ist bevorzugt ein SCR-Tank, insbesondere ein Harnstofftank.

Ein Kraftfahrzeug kann bevorzugt mit einer erfindungsgemäßen Tankvorrichtung so ausgestattet sein, dass der Entlüftungsausgang in Fahrtrichtung hinter der Einfüllöffnung liegt, insbesondere hinter einer Radhausschale des Kraftfahrzeuges.

### Kurzbeschreibung der Zeichnungen

Die Erfindung wird im Folgenden beispielhaft unter Bezugnahme auf die Zeichnungen beschrieben.
- Fig.: ist eine Schnittansicht eines Einfüllrohrkopfes einer erfindungsgemäßen Tankvorrichtung.

### Detaillierte Beschreibung der Erfindung

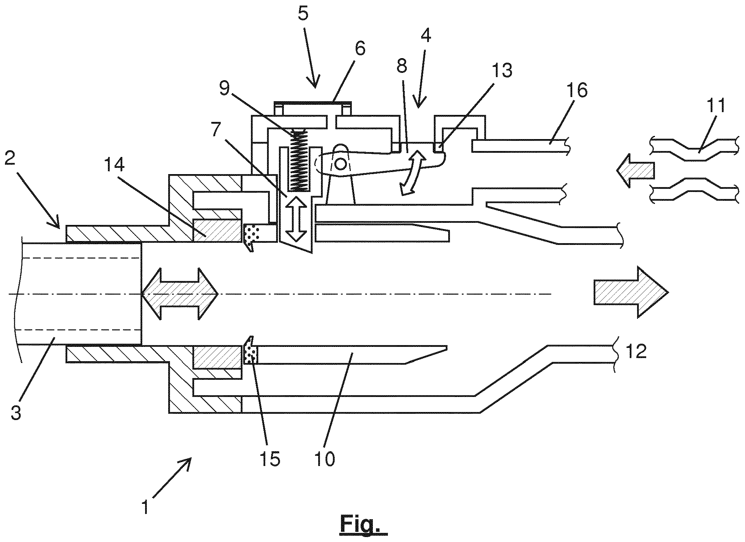

In der Fig. 1 ist eine erfindungsgemäße Tankvorrichtung dargestellt, welche zur Betankung für einen SCR-Tank, insbesondere einen Harnstofftank, als Kraftfahrzeugtank vorgesehen ist.

Die Tankvorrichtung umfasst außer dem nicht dargestellten Kraftfahrzeugtank, einen Einfüllrohrkopf 1 zum Betanken des Kraftfahrzeugtanks, der im Bereich des dargestellten Pfeiles am rechten Ende des Einfüllrohrkopfes 1 in ein Einfüllrohr 12 übergeht.

Am in der Fig. linken Ende des Einfüllrohrkopfes 1 ist eine Einfüllöffnung 2 zum Einführen einer Zapfpistole 3 zum Betanken des Kraftfahrzeugtanks mittels der Zapfpistole 3 vorgesehen.

Die Einfüllöffnung 2 des Einfüllrohrkopfes 1 geht über einen Ringmagneten 14 und eine ebenfalls radiale Lippendichtung 15 in eine Strömungsleiteinrichtung 10 über.

Radial außerhalb der Strömungsleiteinrichtung 10 ist eine Betankungsentlüftungsöffnung 4 ausgebildet, die beim Einführen einer Zapfpistole 3 geöffnet wird, so dass ein Innenraum des Einfüllrohrkopfes 1 über die Betankungsentlüftungsöffnung 4 mit dem nicht dargestellten Entlüftungsausgang fluidverbunden ist.

Als Öffnungsmechanismus für die Betankungsentlüftungsöffnung 4 ist ein Betätigungselement 7 vorgesehen, das als Stößel ausgebildet ist, der durch eine Ausnehmung der Strömungsleiteinrichtung 10 in das Innere des Einfüllrohrkopfes 1 hineinragt. Der Stößel weist eine Einführschräge auf, die ein zunehmendes Verschieben des Betätigungselements 10 bei weiterem Einführen der Zapfpistole 3 bewirkt. Durch das Verschieben des Betätigungselements 7 wird über eine an einem Hebel angebrachte Klappe 8 verschwenkt, die die Betankungsentlüftungsöffnung 4 freigibt.

Das Betätigungselement 7 ist durch ein Federelement 9 in Schließrichtung vorgespannt, so dass ohne eingeführte Zapfpistole 3 die Betankungsentlüftungsöffnung 4 mittels Klappe 8 verschlossen bleibt.

Der Einfüllrohrkopf 1 weist ferner eine Betriebsentlüftungsöffnung 5 auf, die durch eine semipermeable Membran 6 für den Durchtritt von Gasen stets geöffnet, für den Durchtritt von Flüssigkeit, insbesondere des Tankmediums, aber geschlossen ist. Die Betriebsentlüftungsöffnung 5 ist, wie auch die Betankungsentlüftungsöffnung 4, mit dem Entlüftungsausgang fluidverbunden.

Der Entlüftungsausgang ist so ausgebildet, dass er in Einbaulage in einem Kraftfahrzeug, in Fahrtrichtung, hinter der Einfüllöffnung 2 liegt, insbesondere hinter einer Radhausschale des Kraftfahrzeuges.

Zwischen der Betriebsentlüftungsöffnung 5 und/oder der Betankungsentlüftungsöffnung 4 einerseits und dem nicht dargestellten Kraftstofftank andererseits ist ein Entlüftungspfad 16 eingerichtet, wobei im Entlüftungspfad 16 eine Drossel 11 angeordnet ist. Hierdurch kann verhindert werden, dass aufsteigende Flüssigkeit im Entlüftungspfad 16, insbesondere bei einer Zapfpistolenbetankung, bis zur Betankungsentlüftungsöffnung 4 gelangt.

### Bezugszeichenliste

- 1: Einfüllrohrkopf
- 2: Einfüllöffnung
- 3: Zapfpistole
- 4: Betankungsentlüftungsöffnung
- 5: Betriebsentlüftungsöffnung
- 6: semipermeable Membran
- 7: Betätigungselements
- 8: Klappe
- 9: Federelement
- 10: Strömungsleiteinrichtung
- 11: Drossel
- 12: Einfüllrohr
- 13: Dichtung
- 14: Ringmagnet
- 15: Lippendichtung
- 16: Entlüftungspfad

## Patentansprüche

1. Tankvorrichtung für ein Kraftfahrzeug, umfassend einen Kraftfahrzeugtank, einen Einfüllrohrkopf (1) zum Betanken des Kraftfahrzeugtanks und einen Entlüftungsausgang, wobei der Einfüllrohrkopf (1) eine Einfüllöffnung (2) zum Einführen einer Zapfpistole (3) zum Betanken des Kraftfahrzeugtanks mittels der Zapfpistole (3) und eine Betankungsentlüftungsöffnung (4) umfasst, wobei die Betankungsentlüftungsöffnung (4) beim Einführen der Zapfpistole (3) geöffnet wird, so dass ein Innenraum des Einfüllrohrkopfes (1) über die Betankungsentlüftungsöffnung (4) mit dem Entlüftungsausgang fluidverbunden ist, wobei die Betankungsentlüftungsöffnung (4) beim Entfernen der Zapfpistole (3) aus der Einfüllöffnung (2) geschlossen wird,
**dadurch gekennzeichnet, dass** der Einfüllrohrkopf (1) eine Betriebsentlüftungsöffnung (5) aufweist mit einer semipermeablen Membran (6) die den Durchtritt von Gasen durch die Betriebsentlüftungsöffnung (5) ermöglicht und den Durchtritt von Flüssigkeiten verhindert, wobei die Betriebsentlüftungsöffnung (5) mit dem Entlüftungsausgang fluidverbunden ist.

2. Tankvorrichtung nach Anspruch 1,
**dadurch gekennzeichnet, dass** der Entlüftungsausgang dazu ausgebildet ist, in Einbaulage in einem Kraftfahrzeug, in Fahrtrichtung hinter der Einfüllöffnung (2) zu liegen, insbesondere hinter einer Radhausschale des Kraftfahrzeuges.

3. Tankvorrichtung nach zumindest einem der vorhergehenden Ansprüche,
**dadurch gekennzeichnet, dass** die Einfüllöffnung (2) zur Aufnahme eines Betankungsgebindes, insbesondere einer Betankungsflasche, ausgebildet ist.

4. Tankvorrichtung nach zumindest einem der vorhergehenden Ansprüche,
**dadurch gekennzeichnet, dass** die semi-permeable Membran (6) so ausgebildet und angeordnet ist, dass eine Betankungsentlüftung bei Betankung über ein angeschlossenes Betankungsgebinde, insbesondere eine Betankungsflasche, durch die Betriebsentlüftungsöffnung (5) und weiter durch den Entlüftungsausgang erfolgt.

5. Tankvorrichtung nach zumindest einem der vorhergehenden Ansprüche,
**dadurch gekennzeichnet, dass** die Betankungsentlüftungsöffnung (4) beim Einführen der Zapfpistole (3) durch die Einfüllöffnung mittels Verschieben eines Betätigungselements (7) und/ oder durch Verschwenken einer Klappe (8) durch die Zapfpistole (3) geöffnet wird.

6. Tankvorrichtung nach Anspruch 5,
**dadurch gekennzeichnet, dass** das Betätigungselement (7) durch ein Federelement (9) in Schließrichtung vorgespannt ist und/oder dass durch Verschieben des Betätigungselements (7) beim Einführen der Zapfpistole (3) die Klappe (8) in Öffnungsrichtung verschwenkt wird.

7. Tankvorrichtung nach Anspruch 5 oder 6,
**dadurch gekennzeichnet, dass** das Betätigungselement (7) ein Stößel ist, der bevorzugt durch eine Strömungsleiteinrichtung (10) des Einfüllrohrkopfes (1) hindurchragt.

8. Tankvorrichtung nach zumindest einem der Ansprüche 5 bis 7,
**dadurch gekennzeichnet, dass** die semi-permeable Membran (6) radial außerhalb des Betätigungselements (7) und/oder der Klappe (8) am Einfüllrohrkopf (1) angeordnet ist.

9. Tankvorrichtung nach zumindest einem der vorhergehenden Ansprüche,
**dadurch gekennzeichnet, dass** zwischen der Betriebsentlüftungsöffnung (5) und/oder der Betankungsentlüftungsöffnung (4) einerseits und dem Kraftstofftank andererseits ein Entlüftungspfad (16) eingerichtet ist, wobei im Entlüftungspfad bevorzugt eine Drossel (11) angeordnet ist.

10. Tankvorrichtung nach zumindest einem der vorhergehenden Ansprüche,
**dadurch gekennzeichnet, dass** der Kraftfahrzeugtank ein SCR-Tank, insbesondere ein Harnstofftank, ist.

11. Kraftfahrzeug mit einer Tankvorrichtung nach zumindest einem der vorhergehenden Ansprüche,
**dadurch gekennzeichnet, dass** der Entlüftungsausgang in Fahrtrichtung hinter der Einfüllöffnung (2) liegt, insbesondere hinter einer Radhausschale des Kraftfahrzeuges.

## Claims

1. Refuelling device for a motor vehicle, comprising a motor vehicle tank, a filler pipe head (1) for filling the motor vehicle tank and a ventilation outlet, wherein the filler pipe head (1) comprises a filler opening (2) for introduction of a nozzle (3) for filling the motor vehicle tank by means of the nozzle (3) and a filling ventilation opening (4), wherein the filling ventilation opening (4) is opened during introduction of the nozzle (3) so that an inner space of the filler pipe head (1) is fluid-connected to the ventilation outlet via the filling ventilation opening (4), wherein the filling ventilation opening (4) is closed during removal of the nozzle (3) from the filler opening (2),
**characterized in that** the filler pipe head (1) has an operational ventilation opening (5) with a semi-permeable diaphragm (6) which makes it possible for gasses to pass through the operational ventilation opening (5) and prevents the passage of fluids, wherein the operational ventilation opening (5) is fluid-connected to the ventilation outlet.

2. Refuelling device according to Claim 1,
**characterized in that** the ventilation outlet is formed to lie, in the installation position in a motor vehicle, behind the filler opening (2) in the direction of travel, in particular behind a wheel arch liner of the motor vehicle.

3. Refuelling device according to at least one of the preceding claims,
**characterized in that** the filler opening (2) is formed to receive a filling container, in particular a filling cylinder.

4. Refuelling device according to at least one of the preceding claims,
**characterized in that** the semi-permeable diaphragm (6) is formed and arranged so that filling ventilation is carried out during filling via a connected filling container, in particular a filling cylinder, through the operational ventilation opening (5) and further through the ventilation outlet.

5. Refuelling device according to at least one of the preceding claims,
**characterized in that** the filling ventilation opening (4) is opened during introduction of the nozzle (3) through the filler opening by means of displacement of an actuating element (7) and/or by pivoting a flap (8) by the nozzle (3).

6. Refuelling device according to Claim 5,
**characterized in that** the actuating element (7) is pretensioned in the closing direction by a spring element (9) and/or that the flap (8) is pivoted in the opening direction by displacement of the actuating element (7) during introduction of the nozzle (3).

7. Refuelling device according to Claim 5 or 6,
**characterized in that** the actuating element (7) is a tappet which preferably projects through a flow-guiding apparatus (10) of the filler pipe head (1).

8. Refuelling device according to at least one of Claims 5 to 7,
**characterized in that** the semi-permeable diaphragm (6) is arranged radially outside the actuating element (7) and/or the flap (8) at the filler pipe head (1).

9. Refuelling device according to at least one of the preceding claims,
**characterized in that** a ventilation path (16) is established between the operational ventilation opening (5) and/or the filling ventilation opening (4) on one hand and the fuel tank on the other hand, wherein a restrictor (11) is preferably arranged in the ventilation path.

10. Refuelling device according to at least one of the preceding claims,
**characterized in that** the motor vehicle tank is an SCR tank, in particular a urea tank.

11. Motor vehicle with a refuelling device according to at least one of the preceding claims,
**characterized in that** the ventilation outlet lies behind the filler opening (2) in the direction of travel, in particular behind a wheel arch liner of the motor vehicle.

## Revendications

1. Dispositif de réservoir pour un véhicule automobile, comprenant un réservoir de véhicule automobile, une tubulure de remplissage (1) pour le remplissage du réservoir de véhicule automobile et une sortie de ventilation, dans lequel la tubulure de remplissage (1) comprend un orifice de remplissage (2) pour l'introduction d'un pistolet de remplissage (3) pour le remplissage du réservoir de véhicule automobile au moyen du pistolet de remplissage (3) et un orifice de ventilation de remplissage (4), dans lequel l'orifice de ventilation de remplissage (4) est ouvert lors de l'introduction du pistolet de remplissage (3), de telle manière qu'un espace intérieur de la tubulure de remplissage (1) communique avec la sortie de ventilation par l'intermédiaire de l'orifice de ventilation de remplissage (4), dans lequel l'orifice de ventilation de remplissage (4) est fermé lors du retrait du pistolet de remplissage (3) hors de l'orifice de remplissage (2), **caractérisé en ce que** la tubulure de remplissage (1) présente un orifice de ventilation de fonctionnement (5) avec une membrane semi-perméable (6) qui permet le passage de gaz à travers l'orifice de ventilation de fonctionnement (5) et empêche le passage de liquides, dans lequel l'orifice de ventilation de fonctionnement (5) est en communication fluidique avec la sortie de ventilation.

2. Dispositif de réservoir selon la revendication 1, **caractérisé en ce que** la sortie de ventilation est configurée de telle manière que, en position de montage dans un véhicule automobile, elle soit située derrière l'orifice de remplissage (2) dans la direction de marche, en particulier derrière une coque de logement de roue du véhicule automobile.

3. Dispositif de réservoir selon au moins une des revendications précédentes, **caractérisé en ce que** l'orifice de remplissage (2) est configuré de façon à recevoir un récipient de remplissage, en particulier une bouteille de remplissage.

4. Dispositif de réservoir selon au moins une des revendications précédentes, **caractérisé en ce que** la membrane semi-perméable (6) est configurée et disposée de telle manière qu'une ventilation de remplissage se produise lors du remplissage par l'intermédiaire d'un récipient de remplissage raccordé, en particulier une bouteille de remplissage, par l'orifice de ventilation de remplissage (5) puis par la sortie de ventilation.

5. Dispositif de réservoir selon au moins une des revendications précédentes, **caractérisé en ce que** l'orifice de ventilation de remplissage (4) est ouvert, lors de l'introduction du pistolet de remplissage (3) à travers l'orifice de remplissage, par déplacement d'un élément d'actionnement (7) et/ou par pivotement d'un clapet (8) au moyen du pistolet de remplissage (3).

6. Dispositif de réservoir selon la revendication 5, **caractérisé en ce que** l'élément d'actionnement (7) est précontraint dans la direction de fermeture au moyen d'un élément de ressort (9) et/ou **en ce que** le clapet (8) est basculé dans la direction d'ouverture par déplacement de l'élément d'actionnement (7) lors de l'introduction du pistolet de remplissage (3).

7. Dispositif de réservoir selon la revendication 5 ou 6, **caractérisé en ce que** l'élément d'actionnement (7) est un poussoir, qui pénètre de préférence à travers un dispositif de guidage d'écoulement (10) de la tubulure de remplissage (1).

8. Dispositif de réservoir selon au moins une des revendications 5 à 7, **caractérisé en ce que** la membrane semi-perméable (6) est disposée sur la tubulure de remplissage (1) radialement à l'extérieur de l'élément d'actionnement (7) et/ou du clapet (8).

9. Dispositif de réservoir selon au moins une des revendications précédentes, **caractérisé en ce qu'**un chemin de ventilation (16) est réalisé entre l'orifice de ventilation de fonctionnement (5) et/ou l'orifice de ventilation de remplissage (4) d'une part et le réservoir de carburant d'autre part, dans lequel un étranglement (11) est de préférence disposé dans le chemin de ventilation.

10. Dispositif de réservoir selon au moins une des revendications précédentes, **caractérisé en ce que** le réservoir de véhicule automobile est un réservoir SCR, en particulier un réservoir d'urée.

11. Véhicule automobile avec un dispositif de réservoir selon au moins une des revendications précédentes, **caractérisé en ce que** l'orifice de ventilation est situé dans la direction de marche derrière l'orifice de remplissage (2), en particulier derrière une coque de logement de roue du véhicule automobile.
